# FASCICULE DE BREVET EUROPEEN

(11) **EP 3 476 821 B1**
(45) Date de publication et mention de la délivrance du brevet: **19.08.2020**
(21) Numéro de dépôt: 18200810.2
(22) Date de dépôt: 16.10.2018
(51) Int. Cl.: C06B 21/00, C06B 45/00, B33Y 70/00, B29C 64/106

(54) **PROCÉDÉ DE FABRICATION D'UN PRODUIT PYROTECHNIQUE COMPOSITE**
HERSTELLUNGSVERFAHREN EINES PYROTECHNISCHEN VERBUNDPRODUKTS
METHOD FOR MANUFACTURING A COMPOSITE PYROTECHNIC PRODUCT

(30) Priorité: 24.10.2017 FR 1701109
(43) Date de publication de la demande: 01.05.2019
(73) Titulaire: ARIANEGROUP SAS, 75015 Paris (FR)
(72) Inventeur: HOLSTEIN, Audrey, 91700 SAINTE GENEVIEVE DES BOIS (FR); ROCTON, Hugues, 91710 VERT LE PETIT (FR); DESGARDIN, Nancy, 91850 BOURAY (FR)
(74) Mandataire: Cabinet Beau de Loménie

(56) Documents cités:
- EP-A1- 0 194 180
- EP-A1- 1 790 626
- EP-A2- 1 333 015
- WO-A2-2013/019876
- FR-A1- 2 723 086

## Description

La présente invention concerne un procédé de fabrication d'un produit pyrotechnique composite par technique d'impression tridimensionnelle, ainsi qu'une installation associée.

### Arrière-plan de l'invention

La technique d'impression tridimensionnelle (impression 3D) est une technique de fabrication additive permettant de réaliser un dépôt couche par couche à la forme désirée. Cette technique est particulièrement intéressante pour déposer un matériau selon une géométrie complexe.

Dans la technique d'impression 3D, le matériau à déposer est en général sous forme de fil et traverse une buse chauffante afin d'être ramolli puis déposé selon la géométrie souhaitée.

Cette technique peut toutefois ne pas être adaptée au dépôt de compositions pyrotechniques.

En effet, les compositions pyrotechniques comprennent typiquement une charge énergétique présente dans un liant lequel a, en général, une température de ramollissement relativement élevée, par exemple supérieure à 150°C.

Pour être déposées par impression 3D, de telles compositions pyrotechniques nécessiteraient donc d'être chauffées à relativement haute température, ce qui peut poser un problème de sécurité en raison de la présence de la charge énergétique.

On connaît par ailleurs les documents FR 2 723 086 et EP 0 194 180 qui décrivent la formation d'un produit pyrotechnique dans une forme prédéfinie par extrusion à partir d'un mélange comprenant un polymère polyol réticulé ainsi qu'un agent de réticulation libre. Le produit fini est obtenu après extrusion par chauffage afin de réticuler davantage le polymère polyol avec l'agent de réticulation libre.

Il existe donc un besoin pour disposer d'un procédé permettant de déposer, de manière sécurisée, un produit pyrotechnique par impression 3D.

### Objet et résumé de l'invention

L'invention vise, selon un premier aspect, un procédé de fabrication d'un produit pyrotechnique composite, comprenant au moins :
- la formation du produit pyrotechnique par dépôt d'un mélange par impression tridimensionnelle, ledit mélange comprenant au moins :
   - un liant comprenant un polymère polyol réticulé par un agent de réticulation et présentant un rapport de pontage NCO/OH compris entre 0,2 et 0,6, le liant étant dépourvu d'agent de réticulation libre, et
   - une charge énergétique.

Le liant mis en oeuvre comprend un polymère polyol réticulé ayant un rapport de pontage, relativement faible, compris entre 0,2 et 0,6. Le rapport de pontage est, par définition, égal au nombre de fonctions NCO divisé par le nombre de fonctions OH dans le polymère polyol réticulé. Le polymère polyol réticulé mis en œuvre présente donc significativement plus de fonctions OH que de fonctions NCO, et donc un degré de réticulation relativement faible. Le fait que le rapport de pontage soit inférieur ou égal à 0,6 confère au liant une température de ramollissement modérée, typiquement comprise entre 50°C et 90°C, qui permet une utilisation sécurisée du mélange dans la technique d'impression 3D et ce malgré la présence de la charge énergétique. Le fait que le rapport de pontage soit supérieur ou égal à 0,2 permet d'éviter que le mélange ne soit trop fluide, et permet au dépôt obtenu de conserver sa forme.

Dans un exemple de réalisation, le liant comprend en outre un extenseur de chaîne du polymère polyol.

La présence de l'extenseur de chaîne permet de diminuer davantage encore la température de ramollissement du liant.

Dans un exemple de réalisation, le polymère polyol réticulé présente un rapport de pontage NCO/OH compris entre 0,3 et 0,5.

Dans un exemple de réalisation, la teneur massique en charge énergétique dans le mélange est supérieure ou égale à 65%, par exemple supérieure ou égale à 75%.

Le fait que le liant présente une température de ramollissement relativement faible confère avantageusement la possibilité de mettre en œuvre, de manière sécurisée, un mélange fortement chargé en charge énergétique.

Dans un exemple de réalisation, le polymère polyol est un polybutadiène hydroxytéléchélique et l'agent de réticulation est un diisocyanate, la charge énergétique étant par exemple du perchlorate d'ammonium.

Dans un exemple de réalisation, le mélange comprend :
- le polymère polyol en une teneur massique comprise entre 8% et 25%, de préférence entre 10% et 20%, de préférence encore entre 13,1% et 16,4%,
- l'agent de réticulation en une teneur massique comprise entre 1% et 3,4%, de préférence entre 1,2% et 3%, et
- la charge énergétique en une teneur massique comprise entre 65% et 85%, de préférence entre 80% et 82%, et éventuellement
- l'extenseur de chaîne en une teneur massique comprise entre 0,01% et 2,5%, de préférence entre 1,7% et 2,1% ou entre 0,7% et 1,3%.

Dans un exemple de réalisation, le procédé comprend en outre, avant le dépôt par impression tridimensionnelle, la formation du mélange par :
- malaxage d'un pré-mélange comprenant le polymère polyol, l'agent de réticulation et éventuellement l'extenseur de chaîne,
- réticulation thermique du pré-mélange malaxé afin d'obtenir le liant,
- fluidification du liant ainsi obtenu par chauffage,
- introduction de la charge énergétique dans le liant fluidifié et malaxage subséquent afin d'obtenir le mélange.

Un tel exemple de réalisation est avantageux afin d'améliorer davantage encore le caractère sécurisé du procédé lorsque l'on utilise des charges énergétiques susceptibles de réagir avec l'agent de réticulation libre, c'est-à-dire avant qu'il n'assure la réticulation du polyol.

La présente invention vise également une installation pour la mise en œuvre d'un procédé tel que décrit plus haut, comprenant au moins :
- une imprimante tridimensionnelle comprenant une tête de dépose,
- le mélange, et
- un système d'alimentation configuré pour alimenter la tête de dépose avec le mélange.

### Brève description des dessins

D'autres caractéristiques et avantages de l'invention ressortiront de la description suivante, donnée à titre non limitatif, en référence aux dessins annexés, sur lesquels :
- la figure 1 est un ordinogramme représentant différentes étapes d'un exemple de procédé selon l'invention, et
- la figure 2 représente, de manière schématique et partielle, le dépôt du mélange par impression 3D dans le cadre d'un procédé selon l'invention.

### Description détaillée de modes de réalisation

Divers détails relatifs aux différents composés formant le mélange vont tout d'abord être décrits.

Le polymère polyol peut être un polybutadiène hydroxytéléchélique (PBHT).

La masse moléculaire moyenne en nombre (Mn) du polymère polyol, avant le début de la réticulation par l'agent de réticulation, peut être comprise 1000 g/mol et 5000 g/mol, par exemple entre 2000 g/mol et 4000 g/mol.

Le polymère polyol peut être présent, dans le liant, en une teneur massique comprise entre 72,7% et 95,3%.

Le polymère polyol peut être présent, dans le mélange, en une teneur massique comprise entre 8 % et 25%, de préférence entre 10% et 20%.

L'agent de réticulation peut être un diisocyanate. Dans ce cas, on obtient un polyuréthane par réticulation du polyol par l'agent de réticulation diisocyanate. L'agent de réticulation peut, en particulier, être un diisocyanate alicyclique. L'agent de réticulation peut, par exemple, être choisi parmi : le toluène diisocyanate, le dicyclohexylméthylène diisocyanate, l'isophorone diisocyanate, l'hexaméthylène diisocyanate, et leurs mélanges.

L'agent de réticulation peut être présent, dans le liant, en une teneur massique comprise entre 3,7% et 17,2%. L'agent de réticulation peut être présent, dans le mélange, en une teneur massique comprise entre 1 % et 3,4%, de préférence entre 1,2% et 3%.

L'extenseur de chaine peut être un diol, comme l'éthylhexanediol. L'extenseur de chaîne peut être un alcool, par exemple un diol, en C₂ à C₁₀.

L'extenseur de chaine peut être présent, dans le liant, en une teneur massique comprise entre 0,1% et 9,9%. L'extenseur de chaine peut être présent en une quantité telle que le rapport [nombre de moles de fonctions -OH de l'extenseur de chaine]/[nombre de moles de fonctions -OH du polyol] est inférieur ou égal à 1,5.

L'extenseur de chaine peut être présent, dans le mélange, en une teneur massique comprise entre 0,01% et 2,5%, de préférence entre 0,7% et 1,3% ou entre 1,7% et 2,1%.

Le mélange comprend par ailleurs une charge pulvérulente qui comprend une charge énergétique, et éventuellement une charge réductrice.

La charge pulvérulente est mélangée au liant. La charge pulvérulente peut être dispersée dans le liant. Le liant peut constituer une matrice polymérique enrobant la charge pulvérulente.

La charge énergétique est connue en soi et peut, par exemple, être choisie parmi : le perchlorate d'ammonium (PA), le nitrate d'ammonium (NA), l'hexogène (RDX), l'octogène (HMX), l'hexanitrohexaazaisowurtzitane (CL20), le dinitroamidure d'ammonium (ADN), l'éthylène dinitramine (EDNA), et leurs mélanges.

La charge énergétique peut être présente dans le mélange en une teneur massique supérieure ou égale à 65%. Cette teneur massique peut être comprise entre 65% et 85%, par exemple entre 75% et 85%.

Selon une variante, la charge pulvérulente peut en outre comporter une charge réductrice, différente de la charge énergétique. La charge réductrice est connue en soi peut, par exemple, être choisie parmi : l'aluminium, le bore, le zirconium et leurs mélanges.

La charge réductrice, lorsqu'elle est présente, peut être présente dans le mélange en une teneur massique comprise entre 15% et 20%, par exemple entre 18% et 20%.

La teneur massique en charge pulvérulente dans le mélange peut être supérieure ou égale à 75%, par exemple à 80%, par exemple à 85%. La teneur massique en charge pulvérulente dans le mélange peut être comprise entre 75% et 85%, par exemple.

Le liant peut, en outre, comporter un ou plusieurs additifs connus en soi, comme un anti-oxydant ou un catalyseur de réticulation.

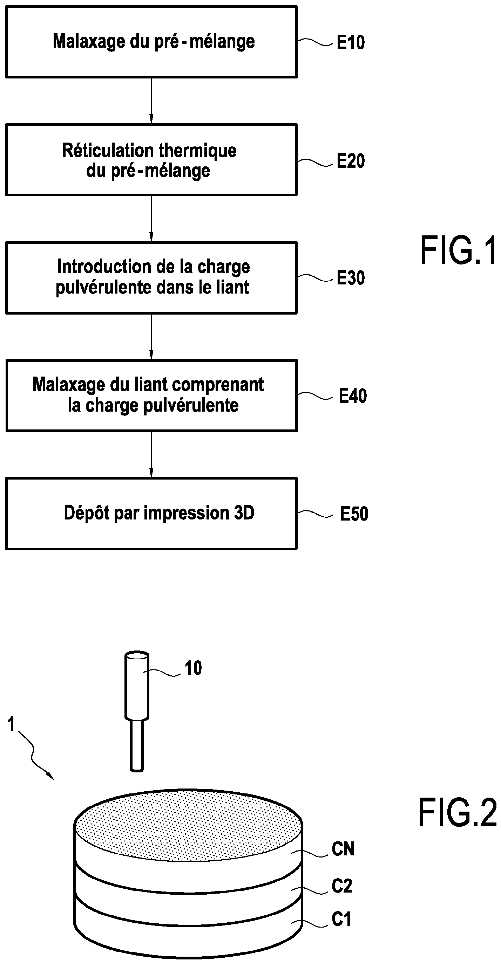

On va décrire, en lien avec les figures 1 et 2, différentes étapes d'un procédé selon l'invention détaillant un exemple de fabrication du mélange et son dépôt subséquent par impression 3D pour former le produit pyrotechnique.

On introduit tout d'abord dans un mélangeur, le polymère polyol, l'agent de réticulation et éventuellement l'extenseur de chaîne. Ces constituants peuvent chacun être introduits à l'état liquide dans le mélangeur. Le pré-mélange ainsi constitué est alors malaxé dans le mélangeur (étape E10).

Le malaxage du pré-mélange peut être réalisé à une température inférieure ou égale à 60°C, par exemple comprise entre 40°C et 60°C.

Le malaxage du pré-mélange est réalisé sous vide. Le pré-mélange peut être malaxé pendant une durée supérieure ou égale à 1 heure.

Une fois le malaxage réalisé, le pré-mélange malaxé peut être à l'état pâteux.

Le pré-mélange subit, après le malaxage, une cuisson à une température suffisante pour réticuler le polyol par l'agent de réticulation (étape E20). Les fonctions alcool du polyol sont en effet aptes à réagir avec l'agent de réticulation afin de former des ponts entre les chaînes du polymère polyol.

Cette réticulation thermique du polyol permet d'obtenir le liant. La réticulation thermique peut être réalisée à une température supérieure ou égale à 50°C, par exemple comprise entre 50°C et 90°C. La durée de la réticulation thermique peut être supérieure ou égale à un jour, voire à une semaine.

La quantité d'agent de réticulation introduite est ajustée afin d'obtenir, après réticulation thermique, un rapport de pontage compris entre 0,2 et 0,6, et donc un polymère polyol sous-réticulé. L'homme du métier sait, de par ses compétences générales, déterminer la quantité d'agent de réticulation à introduire afin d'obtenir le rapport de pontage souhaité. Le polymère polyol réticulé peut présenter un rapport de pontage NCO/OH compris entre 0,3 et 0,5 ou entre 0,3 et 0,45.

Du fait de cette sous-réticulation, le liant obtenu présente une température de ramollissement relativement faible, par exemple comprise entre 50°C et 90°C.

Le liant obtenu est sensiblement dépourvu d'agent de réticulation libre, c'est-à-dire apte à réagir pour réticuler davantage le polymère polyol. Dans le mélange prêt à être déposé par impression 3D, sensiblement la totalité de l'agent de réticulation a déjà réagi pour réticuler le polymère polyol. Le fait de ne pas avoir d'agent de réticulation libre dans le liant lors du dépôt par impression 3D permet d'éviter tout risque de réticulation supplémentaire lors de la traversée de la buse chauffante de l'imprimante 3D et donc de conserver de manière certaine un état ramolli compatible de la technique d'impression 3D. En particulier, le liant peut être dépourvu d'un agent de réticulation libre et bloqué, c'est-à-dire dont les groupes NCO ne peuvent réagir avec les groupes OH du polyol qu'après apport extérieur d'énergie, par exemple par cuisson.

Selon cet exemple, la charge énergétique est ajoutée au liant une fois la réticulation terminée. Comme évoqué plus haut, ce cas est avantageux pour des charges susceptibles d'interférer avec l'agent de réticulation libre. Le liant obtenu est tout d'abord ramolli par chauffage, par exemple à une température comprise entre 50°C et 90°C, et la charge pulvérulente est ensuite introduite dans le liant à l'état ramolli (étape E30). La charge pulvérulente introduite comporte la charge énergétique et éventuellement la charge réductrice.

Un malaxage du liant ramolli chargé par la charge pulvérulente est alors effectué (étape E40). On obtient, après ce malaxage, le mélange destiné à être déposé par impression 3D. La durée de ce malaxage peut être supérieure ou égale à 1 heure.

On vient de décrire un exemple de réalisation dans lequel la charge énergétique est introduite après la réticulation thermique du polyol. Comme évoqué plus haut, un tel exemple de réalisation est avantageux afin de s'affranchir du risque d'un incident lié à la présence conjointe de la charge énergétique et de l'agent de réticulation libre. On ne sort toutefois pas du cadre de l'invention lorsque la charge énergétique, et éventuellement la charge réductrice, est introduite avant la réticulation thermique du polyol lorsque ces charges ne sont pas susceptibles d'interférer négativement avec l'agent de réticulation libre.

On va maintenant décrire plus en détails l'étape de dépôt par impression 3D (étape E50) permettant d'obtenir le produit pyrotechnique à partir du mélange.

Le produit pyrotechnique est obtenu par dépôt de couches superposées C1-CN du mélange. Ce dépôt successif de couches C1-CN est effectué à l'aide d'une imprimante 3D, qui constitue un dispositif connu en soi.

L'imprimante 3D comprend une tête de dépose 10 munie d'un organe de chauffage. La température imposée par l'organe de chauffage permet de fluidifier le mélange afin de le déposer à la forme souhaitée par impression 3D et obtenir ainsi le produit pyrotechnique 1. Bien entendu en raison de la présence de la charge énergétique, la température imposée lors de ce chauffage est limitée afin de garantir un niveau de sécurité satisfaisant durant le dépôt. La température imposée par l'organe de chauffage au mélange dans la tête de dépose peut par exemple être comprise entre 50°C et 90°C.

Le mélange peut être stocké dans un dispositif de stockage et alimenter la tête de dépose 10 au fur et à mesure de la formation du produit pyrotechnique 1.

Dans ce cas, le mélange peut être sous la forme d'un fil. Ce fil peut par exemple être stocké sur un support et être enroulé, sous la forme d'une bobine, sur ce support. Dans ce cas, le fil est déroulé, au fur et à mesure du dépôt par impression 3D, afin d'alimenter la tête de dépose.

Selon cet exemple, le procédé peut comprendre, avant le dépôt par impression 3D, une étape de mise en forme préalable durant laquelle le mélange est ramolli par chauffage et mis sous la forme d'un fil par exemple par extrusion au travers d'une filière. Le fil ainsi formé est ensuite enroulé sur le support et stocké pour une utilisation ultérieure pour alimenter la tête de dépose de l'imprimante 3D.

Selon une variante, la tête de dépose 10 peut comporter une filière en amont d'une buse de dépose. La filière est alimentée par le mélange et lui confère la forme d'un fil lequel est ensuite directement déposé par la buse de dépose.

La tête de dépose 10 est commandée par un système de contrôle. Le système de contrôle est configuré pour commander le déplacement de la tête de dépose 10 et pour actionner ou arrêter le dépôt du mélange par la tête de dépose 10. Un tel système de contrôle est connu en soi.

La tête de dépose 10 est ainsi contrôlée par le système de contrôle afin de conférer au produit pyrotechnique 1 la géométrie souhaitée. Cela permet en particulier, si cela est souhaité, de former un produit pyrotechnique présentant un ou plusieurs canaux internes ou ayant, en variante, une structure pleine.

On obtient, à l'issue du dépôt par impression 3D, un produit pyrotechnique 1 comprenant une pluralité de couches C1-CN du mélange superposées et solidaires entre elles. Le dépôt du produit pyrotechnique 1 peut être effectué dans un milieu à température ambiante (20°C).

Le produit pyrotechnique 1 ainsi fabriqué peut être utilisé en tant que chargement pyrotechnique d'un générateur de gaz pyrotechnique. Le produit pyrotechnique 1 obtenu peut en variante constituer un bloc de propergol dont la combustion est utilisée à des fins de propulsion.

### Exemple

Un pré-mélange comprenant les composés constitutifs du liant a tout d'abord été préparé.

Pour cela, les composés suivants ont été introduits dans un malaxeur dans les proportions indiquées :
- polybutadiène hydroxytéléchélique à raison de 86,7% en masse, commercialisé sous la référence « Poly bd R45HT » par la société CRAY VALLEY, Mn = 2800 g/mol,
- additif antioxydant 2,6-di-tert-butyl-4-méthylphénol à raison de 1% en masse, commercialisé sous la référence « Ionol » par la société Oxiris Chemicals,
- extenseur de chaîne ethylhexanediol à raison de 5,5% en masse, commercialisé par la société Gulf Chemical international,
- agent de réticulation isophorone diisocyanate (IPDI) à raison de 6,8% en masse, commercialisé par la société Evonik industrie, et
- catalyseur de réticulation dilaurate de dibutyletain (DBTL) à raison de 0,01% en masse.

Le pré-mélange résultant a alors été malaxé, à 60°C, durant 2 heures, sous vide. 100 grammes d'une pâte homogène ont ainsi été obtenus.

La pâte obtenue a été coulée dans un moule lequel a été placé en étuve durant 7 jours à 60°C afin de faire réticuler le polybutadiène hydroxytéléchélique. Un rapport de pontage égal à 0,4 a été obtenu pour le polyol réticulé.

15 grammes du liant ainsi obtenu ont alors été introduits dans un malaxeur. Une fluidification du liant a été opérée par chauffage de l'enceinte du malaxeur à 50°C pour obtenir de nouveau une pâte.

65 grammes de perchlorate d'ammonium et 20 grammes d'aluminium ont été introduits dans le liant fluidifié et l'ensemble a été malaxé pendant 2 heures afin d'obtenir le mélange.

Le mélange a été introduit à 50°C dans le système d'injection d'une imprimante 3D. Le système d'injection était stabilisé à une température de 50°C. Le produit pyrotechnique a été déposé couche par couche à la géométrie souhaitée par l'imprimante 3D.

L'expression « compris(e) entre ... et ... » doit se comprendre comme incluant les bornes.

## Revendications

1. Procédé de fabrication d'un produit pyrotechnique (1) composite, comprenant au moins :
- la formation du produit pyrotechnique par dépôt d'un mélange par impression tridimensionnelle, ledit mélange comprenant au moins :
• un liant comprenant un polymère polyol réticulé par un agent de réticulation et présentant un rapport de pontage NCO/OH compris entre 0,2 et 0,6, le liant étant dépourvu d'agent de réticulation libre, et
• une charge énergétique.

2. Procédé selon la revendication 1, dans lequel le liant comprend en outre un extenseur de chaîne du polymère polyol.

3. Procédé selon la revendication 1 ou 2, dans lequel le polymère polyol réticulé présente un rapport de pontage NCO/OH compris entre 0,3 et 0,5.

4. Procédé selon l'une quelconque des revendications 1 à 3, dans lequel la teneur massique en charge énergétique dans le mélange est supérieure ou égale à 65%.

5. Procédé selon l'une quelconque des revendications 1 à 4, dans lequel le polymère polyol est un polybutadiène hydroxytéléchélique et l'agent de réticulation est un diisocyanate.

6. Procédé selon l'une quelconque des revendications 1 à 5, dans lequel le mélange comprend :
- le polymère polyol en une teneur massique comprise entre 8% et 25%,
- l'agent de réticulation en une teneur massique comprise entre 1% et 3,4%, et
- la charge énergétique en une teneur massique comprise entre 65% et 85%, et éventuellement
- l'extenseur de chaîne en une teneur massique comprise entre 0,01% et 2,5%.

7. Procédé selon l'une quelconque des revendications 1 à 6, dans lequel le procédé comprend en outre, avant le dépôt par impression tridimensionnelle, la formation du mélange par :
- malaxage d'un pré-mélange comprenant le polymère polyol, l'agent de réticulation et éventuellement l'extenseur de chaîne,
- réticulation thermique du pré-mélange malaxé afin d'obtenir le liant,
- fluidification du liant ainsi obtenu par chauffage,
- introduction de la charge énergétique dans le liant fluidifié et malaxage subséquent afin d'obtenir le mélange.

8. Installation pour la mise en œuvre d'un procédé selon l'une quelconque des revendications 1 à 7, comprenant au moins :
- une imprimante tridimensionnelle comprenant une tête de dépose (10),
- le mélange, et
- un système d'alimentation configuré pour alimenter la tête de dépose avec le mélange.

## Patentansprüche

1. Verfahren zur Herstellung eines pyrotechnischen Verbundprodukts (1), umfassend mindestens:
- die Bildung des pyrotechnischen Produkts durch Aufbringen einer Mischung durch dreidimensionalen Druck, wobei die Mischung mindestens umfasst:
• ein Bindemittel, das ein Polymerpolyol umfasst, das durch ein Vernetzungsmittel vernetzt wird und ein NCO/OH-Brückenbildungsverhältnis zwischen 0,2 und 0,6 aufweist, wobei das Bindemittel kein freies Vernetzungsmittel aufweist, und
• eine Energieladung.

2. Verfahren nach Anspruch 1, wobei das Bindemittel ferner einen Kettenverlängerer des Polymerpolyols umfasst.

3. Verfahren nach Anspruch 1 oder 2, wobei das vernetzte Polymerpolyol ein NCO/OH-Brückenbildungsverhältnis zwischen 0,3 und 0,5 aufweist.

4. Verfahren nach einem der Ansprüche 1 bis 3, wobei der Massenanteil an Energieladung in der Mischung größer als oder gleich 65 % ist.

5. Verfahren nach einem der Ansprüche 1 bis 4, wobei das Polymerpolyol ein Hydroxyl-terminiertes Polybutadien ist und das Vernetzungsmittel ein Diisocyanat ist.

6. Verfahren nach einem der Ansprüche 1 bis 5, wobei die Mischung umfasst:
- das Polymerpolyol in einem Massenanteil zwischen 8 % und 25 %,
- das Vernetzungsmittel in einem Massenanteil zwischen 1 % und 3,4 %, und
- die Energieladung in einem Massenanteil zwischen 65 % und 85 %, und gegebenenfalls
- den Kettenverlängerer in einem Massenanteil zwischen 0,01 % und 2,5 %.

7. Verfahren nach einem der Ansprüche 1 bis 6, wobei das Verfahren ferner vor dem Aufbringen durch dreidimensionalen Druck die Bildung der Mischung umfasst durch:
- Rühren einer Vormischung, die das Polymerpolyol, das Vernetzungsmittel und gegebenenfalls den Kettenverlängerer umfasst,
- thermische Vernetzung der gerührten Vormischung, um das Bindemittel zu erhalten,
- Verflüssigung des so erhaltenen Bindemittels durch Erwärmen,
- Einführen der Energieladung in das verflüssigte Bindemittel und anschließendes Rühren, um die Mischung zu erhalten.

8. Einrichtung zur Durchführung eines Verfahrens nach einem der Ansprüche 1 bis 7, umfassend mindestens:
- einen dreidimensionalen Drucker, der einen Aufbringkopf (10) umfasst,
- die Mischung, und
- ein Versorgungssystem, das dazu ausgestaltet ist, den Aufbringkopf mit der Mischung zu versorgen.

## Claims

1. A process for manufacturing a composite pyrotechnic product (1), comprising at least:
- forming the pyrotechnic product by depositing a mixture by three-dimensional printing, said mixture comprising at least:
∘ a binder comprising a polymer polyol cross-linked by a cross-linking agent and having an NCO/OH bridging ratio comprised between 0.2 and 0.6, the binder being free of free cross-linking agent, and
∘ an energetic filler.

2. The process as claimed in claim 1, wherein the binder further comprises a chain extender of the polymer polyol.

3. The process as claimed in claim 1 or 2, wherein the cross-linked polymer polyol has an NCO/OH bridging ratio comprised between 0.3 and 0.5.

4. The process as claimed in any one of claims 1 to 3, wherein the mass content of energetic filler in the mixture is greater than or equal to 65%.

5. The process as claimed in any one of claims 1 to 4, wherein the polymer polyol is a hydroxytelechelic polybutadiene and the cross-linking agent is a diisocyanate.

6. The process as claimed in any one of claims 1 to 5, wherein the mixture comprises:
- the polymer polyol in a mass content comprised between 8% and 25%,
- the cross-linking agent in a mass content comprised between 1% and 3.4%, and
- the energetic filler in a mass content comprised between 65% and 85%, and optionally
- the chain extender in a mass content comprised between 0.01% and 2.5%.

7. The process as claimed in any one of claims 1 to 6, wherein the process further comprises, prior to deposition by three-dimensional printing, forming the mixture by:
- blending a premix comprising the polymer polyol, the cross-linking agent and optionally the chain extender,
- thermal cross-linking of the blended premix to obtain the binder,
- fluidification of the binder thus obtained by heating,
- introduction of the energetic filler into the fluidized binder and subsequent blending to obtain the mixture.

8. An apparatus for carrying out a process as claimed in any one of claims 1 to 7, comprising at least:
- a three-dimensional printer comprising a dispensing head (10),
- the mixture, and
- a feed system configured to supply the dispensing head with the mixture.
